(19)

Europäisches Patentamt
European Patent Office
Office européen des brevets

(11) **EP 1 840 795 A1**

(12) **EUROPEAN PATENT APPLICATION**

(43) Date of publication:
**03.10.2007 Bulletin 2007/40**

(51) Int Cl.:
***G06K 9/00*** *(2006.01)*

(21) Application number: **07006533.9**

(22) Date of filing: **29.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **31.03.2006 JP 2006100715**

(71) Applicant: **KABUSHIKI KAISHA TOSHIBA**
**Tokyo 105-8001 (JP)**

(72) Inventors:
• **Hasebe, Mitsutake**
**Tokyo 105-8001 (JP)**
• **Takizawa, Kei**
**Tokyo 105-8001 (JP)**

(74) Representative: **HOFFMANN EITLE**
**Patent- und Rechtsanwälte**
**Arabellastrasse 4**
**81925 München (DE)**

(54) **Face image read apparatus and method, and entrance/exit management system**

(57)    A face image read apparatus which reads the face image of a moving person by the time he or she arrives at a particular position, comprises first and second image capture units (101, 102) configured to capture an area where the moving person enters from first and second directions, respectively, a first detector unit (103) configured to detect the face region of the moving person from an image captured by the first image capture unit, a second detector unit (111) configured to detect whether the number of face regions detected by the first detector unit is one or more, and a switching control unit (111) configured to, according to the result of detection by the second detector unit, switch between a first process based on an image captured by the first image capture unit and a second process based on images captured by the first and second image capture units.

FIG. 1

EP 1 840 795 A1

## Description

The present invention relates to a face image read method and apparatus which reads the face image of a moving person by the time he or she arrives at a particular position.

Furthermore, the present invention relates to an entrance/exit management system which is configured to read the face image of a moving person by the time he or she arrives at a particular position, collating face feature information extracted from the read face image with previously entered face feature information to decide whether or not that person is a previously entered person, and control opening and closing of a gate according to the result of decision.

JP-A 2001-266152 (KOKAI) (document 1) discloses an entrance/exit management system equipped with a video camera. This system reads the face image of a person as a candidate for authentication when he or she comes to a stop in front of the video camera and checks face feature information extracted from the read face image with previously entered dictionary information (face feature information) to decide whether that person is a previously entered person. When the person is a previously entered one, the entrance/exit management system opens a gate to an area (a room or facilities).

The above device is supposed to read the face image of a person who comes to a stop in front of a camera. Accordingly, trying to read the face image of a pedestrian (moving person) and provide face authentication by the time the pedestrian approaches a gate may result in lowered authentication accuracy.

For example, JP-A 2000-331207 (document 2) and JP-A 2002-140699 (document 3) disclose pedestrian authentication techniques.

In the technique disclosed in document 2, a camera is placed directed slightly upward at a height lower than the height of the face of a pedestrian so as to capture his or her full face. The reason is that, when a person walks, he or she tends to look downward and therefore shooting the face from below makes it easier to capture a full face.

In the technique disclosed in document 3, a camera is placed in a location where the face of a pedestrian can be captured when a door opens and the face of the pedestrian is captured the moment the door opens. This is based on a tendency for a person to look front when he or she passes through a door.

The techniques disclosed in documents 1, 2 and 3 each suppose one pedestrian. That is, it is supposed that a captured image contains one pedestrian.

The techniques do not suppose a case where two or more pedestrians might be captured. In such a case, the above techniques might cause failure to correctly read the face image of one pedestrian. This might result in lowered authentication accuracy.

It is an object of the present invention to provide a face image read apparatus and method which allows the face image of one person to be selectively read from among two or more persons captured by cameras.

It is another object of the present invention to provide an entrance/exit management system which allows one person to be selectively identified from among two or more persons captured by cameras.

According to an aspect of the invention, there is provided a face image read apparatus which reads the face image of a moving person by the time he or she arrives at a particular position, comprising: a first image capture unit configured to capture an area where the moving person enters from a first direction; a second image capture unit configured to capture the area where the moving person enters from a second direction; a first detector unit configured to detect the face region of the moving person from an image captured by the first image capture unit; a second detector unit configured to detect whether the number of face regions detected by the first detector unit is one or more; and a switching control unit configured to, according to the result of detection by the second detector unit, switch between a first process based on an image captured by the first image capture unit and a second process based on images captured by the first and second image capture units.

According to another aspect of the invention, there is provided a face image read method which reads the face image of a moving person by the time he or she arrives at a particular position, comprising: capturing an area where the moving person enters from first and second directions; detecting the face region of the moving person from an image captured from the first direction; detecting whether the number of face regions detected is one or more; and switching, according to the result of detection of the number of face regions, between a first process based on an image captured from the first direction and a second process based on images captured from the first and second directions.

According to still another aspect of the invention, there is provided an entrance/exit management system adapted to read the face image of a moving person by the time he or she arrives at a particular position, collate face feature information extracted from the read face image with previously entered face feature information, decide whether or not the person is a previously entered person, and open or shut a gate on the basis of the result of decision, comprising: a first image capture unit configured to capture an area where the moving person enters from a first direction; a second image capture unit configured to capture the area where the moving person enters from a second direction; a first detector unit configured to detect the face region of the moving person from an image captured by the first image capture unit; a second detector unit configured to detect whether the number of face regions detected by the first detector unit is one or more; a switching control unit configured to, according to the result of detection by the second detector unit, switch between a first process based on an image captured by the first image capture unit and a second process based on images captured by the first and second image capture units; a face feature extraction unit configured to extract face feature information from face region information output through the process selected by the switching control unit; a collation unit configured to collate the face feature information extracted by the face feature extraction unit with previously entered face feature information; and a gate control unit configured to control opening or shutting of the gate according to the result of collation by the collation unit.

The invention can be more fully understood from the following detailed description when taken in conjunction with the accompanying drawings, in which:

FIG. 1 is a schematic block diagram of an entrance/exit management system to which a face image read apparatus according to a first embodiment is applied;
FIGS. 2A and 2B are top and side views for use in explanation of how to install the video cameras in the face reading apparatus;
FIG. 3 shows an example of an image displayed on the display unit in the first embodiment;
FIG. 4 is a flowchart illustrating the processing of the entry candidate selection unit in the first embodiment;
FIG. 5 is a flowchart illustrating the processing of the entry candidate selection unit in a second embodiment;
FIG. 6 illustrates the definition of the distance in the direction of depth of a walkway between person regions in the second embodiment;
FIG. 7 is a flowchart illustrating the processing of the entry candidate selection unit in a third embodiment;
FIG. 8 illustrates the definition of the distance between face regions in the third embodiment; and
FIG. 9 shows an example of an image displayed on the display unit in a fourth embodiment.

The preferred embodiments of the present invention will be described hereinafter with reference to the accompanying drawings.

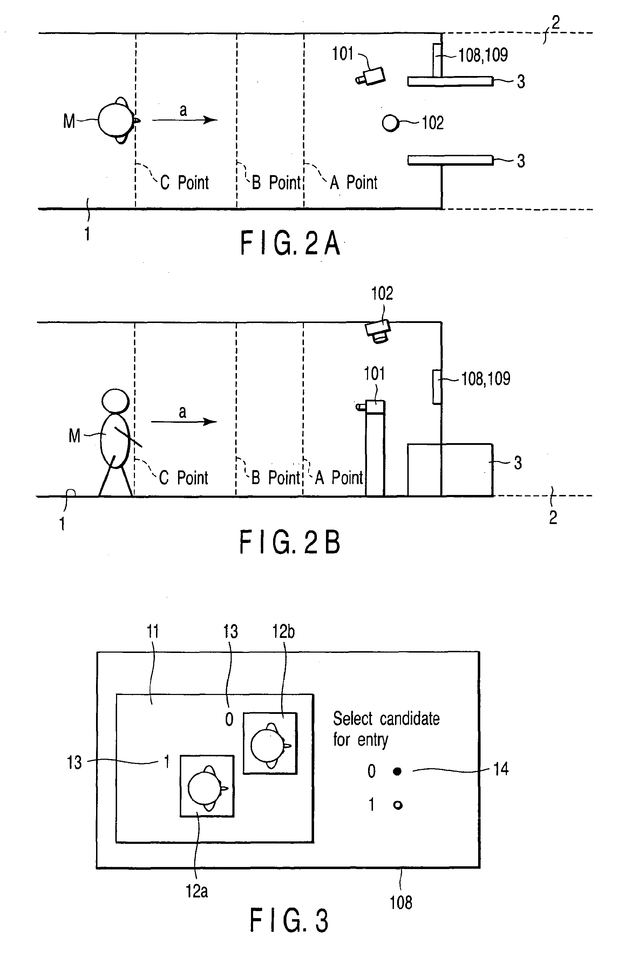

The common summary of the embodiments will be described briefly. For example, as shown in FIGS. 2A and 2B, the face of a pedestrian (hereinafter also referred to as a person) M is captured by cameras while he or she is moving in the direction of an arrow a on a walkway 1 toward a gate device 3, such as a door or a gate, set in an area 2 where he or she is to enter or leave (a room or facilities). Specifically, while he or she is present between points C and A, his or her image including at least the face is captured by cameras and, while he or she moves from the point A to the gate device 3, face authentication is made to decide whether or not the pedestrian M is a person who has been entered (registered) beforehand. If the identity of the pedestrian M is validated as the result of decision, he or she is allowed to pass through the gate device 3; otherwise, he or she is not allowed. Here we refer the area of the walkway 1 from C to A point as capture area where the face of the pedestrian M is captured.

First, a first embodiment of the invention will be described.

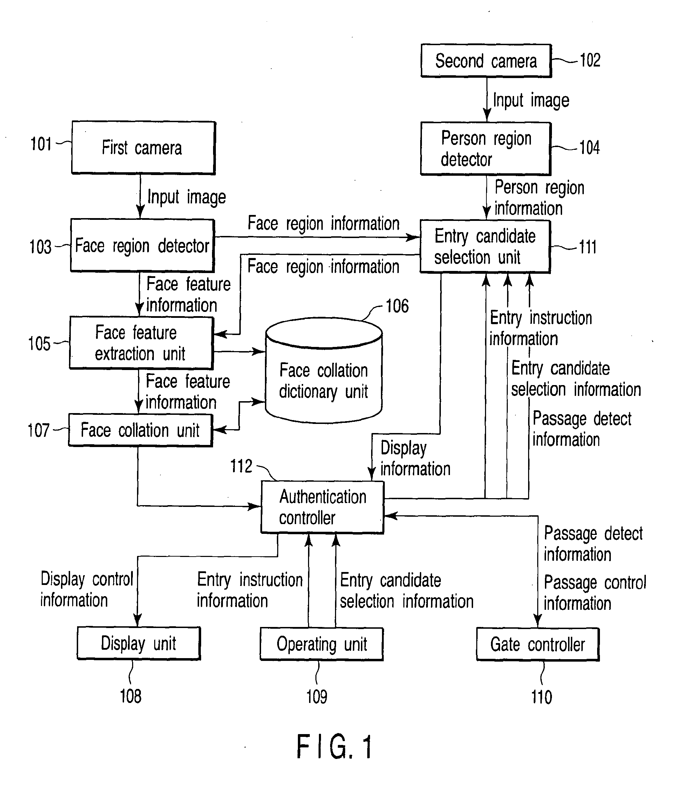

FIG. 1 schematically shows the configuration of an entrance/exit management system to which a face image reader (face image authentication device) according to the first embodiment is applied. This management system is equipped with a first video camera (hereinafter referred to simply as a camera) 101, a second video camera (hereinafter referred to simply as a camera) 102, a face region detector 103, a person region detector 104, a face feature extraction unit 105, a face collocation dictionary unit 106, a face collocation unit 107, a display unit 108, an operating unit 109, a gate controller 110, an entry (registration) candidate selection unit 111, and an authentication controller 112.

The camera 101 is adapted to capture an image of the pedestrian M which includes at least his or her face and is installed in a first position to capture him or her from a first direction (from the front side). The camera 102 is adapted to capture an image of a wide field of view including the pedestrian M and installed in a second position to capture him or her from a second direction (from above).

Hereinafter, each of the components will be explained.

The first camera 101 is adapted to capture an image including at least the face of the pedestrian M for the purpose of collecting full faces as images for pedestrian identification. The camera comprises a television camera using an imaging device, such as a CCD sensor. The first camera 101 is placed between the A point and the gate device 3 on one side of the walkway 1 as shown in FIGS. 2A and 2B. The first camera is installed almost horizontally at a height of the order of the average height of persons, for example.

An image including the full face of the pedestrian M can be obtained by placing the first camera 101 in that way. The image captured is sent to the face region detector 103 as digital light and shade image of 512 × 512 pixels by way of example.

The second camera 102 is adapted to capture an image of a large field of view including the pedestrian M for the purpose of capturing a person with a larger field of view than the first camera 101. As with the first camera, the second camera comprises a television camera using an imaging device, such as a CCD sensor. The second camera 102 is placed so as to look down from the ceiling so that the area from the A point to the gate device 3 on the walkway 1 is captured as shown in FIGS. 2A and 2B. The captured image is sent to the person region detector 104 as digital light and shade image of 640 × 480 pixels by way of example.

The face region detector 103 detects the face region of the pedestrian M from the image captured by the first camera 101. The use of a method described in, for example, an article entitled "Face feature point extraction based on combination of shape extraction and pattern collation" by Fukui and Yamaguchi, vol. J80-D-H, No. 8, pp. 2170 - 2177, 1997 allows the face region to be detected with great accuracy. The detected face region information is sent to the entry candidate selection unit 111.

The person region detector 104 detects a candidate region where a person (pedestrian M) is present from the image captured by the second camera 102. The person region is detected from the difference with background image as in a technique described in, for example, an article entitled "Moving object detection technique using post confirmation" by Nakai, 94-CV90. pp. 1 - 8, 1994. The detected person region information is sent to the entry candidate selection unit 111.

The face feature extraction unit 105 extracts feature information used at the time of entry or collation. For example, the face region information obtained from the face region detector 103 or the entry candidate selection unit 111 is cut into shapes of a given size with reference to face feature points and the resulting light and shade information is used as the feature information. Here, the light and shade values of a region of $m \times n$ pixels is used as they are as the feature information, and $m \times n$ dimensional information is used as a feature vector. A partial space is calculated by determining the correlation matrix of the feature vector from those data and determining a normalized orthogonal vector based on the known K-L expansion. The method of calculating the partial space involves determining the correlation matrix (or covariance matrix) of the feature vector and determining the normalized orthogonal vector (characteristic vector) by the K-L expansion of the correlation vector. The partial space is represented by a set of k number of characteristic vectors corresponding to characteristic values and selected in descending order of their magnitude. In this embodiment, the correlation matrix Cd is determined from the feature vector and the matrix $\Phi$ of the characteristic vector is determined by diagonalization with the correlation matrix given by $Cd = \Phi d \Lambda d \Phi d T$. The partial space is utilized as face feature information for personal identification. This information is simply entered in advance into the dictionary as dictionary information. As will be described later, the partial space itself may be used as face feature information for identification. The calculated face feature information is sent to the face collation dictionary unit 106 at the time of entry or to the face collation unit 107 at the time of collation.

The face collation dictionary unit 106 is configured to hold face feature information obtained by the face feature extraction unit 105 as dictionary information and calculate a similarity to the person M. The face feature information held in the dictionary is output to the face collation unit 107 as required.

The face collation unit 107 calculates a similarity between the face feature information of the pedestrian M extracted by the face feature extraction unit 105 and each face feature information (dictionary information) stored in the face collation dictionary unit 106. This face collation process can be implemented by using a mutual partial space method described in an article entitled "Face identification system using moving images" by Yamaguchi, Fukui, and Maeda, PRMU97-50, pp. 17-23, 1997-06. The result of face correlation (similarity) is sent to the authentication controller 112.

The display unit 108 is installed in the vicinity of the gate device 3 as shown in FIGS. 2A and 2B to display various items of information on the basis of display control information from the authentication controller 112. For example, at the time of authentication, the current situation of face authentication is displayed or, at the time of entry, information for visual confirmation is displayed in the presence of two or more candidates for entry. The display unit 108 is set at a height of the order of the average height of people.

In the presence of two or more persons at the time of entry of dictionary information, the display unit 108 displays, as shown in FIG. 3, an image 11 captured by the second camera 102, person regions 12a and 12b detected by the person region detector 104, identification information (ID) 13 given to the detected person regions 12a and 12b, a message to prompt a person in charge to select a candidate for entry, and selecting touch buttons 14.

The operating unit 109 is adapted to enter selection information for a candidate for entry obtained through visual confirmation of the contents displayed on the display unit 108 at the time of entry and entry instruction information. The operating unit 109 comprises a touch panel integrated with the display unit 108.

The gate controller 110 sends a control signal to the gate device 3 shown in FIGS. 2A and 2B to instruct it to open or shut on the basis of passage control information from the authentication controller 112. The gate controller is equipped with a sensor which detects the passage of the pedestrian M and sends passage detect information to the authentication controller 112 when the pedestrian M passes.

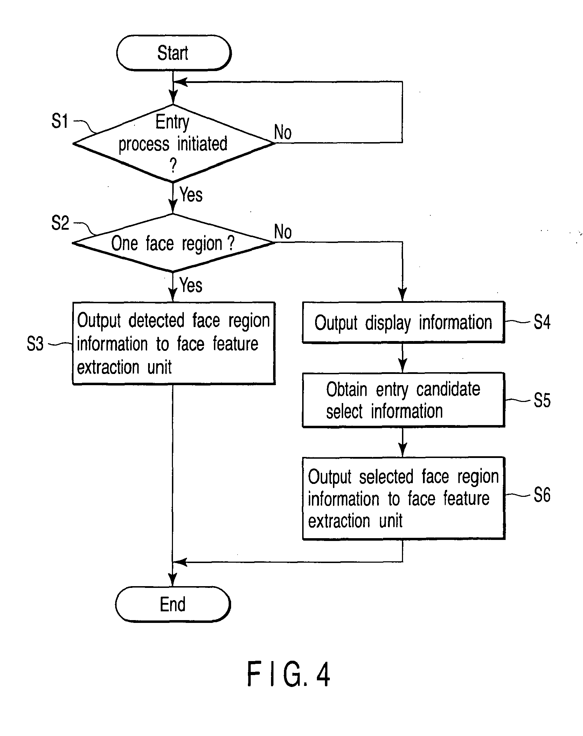

The entry candidate selection unit 111 performs a process of selecting a person which becomes a candidate for entry at the time of entry of dictionary information. The concrete flow of the selection process will be described below with reference to a flowchart shown in FIG. 4.

The entry candidate selection unit 111 initiates an entry candidate selection process upon receipt of entry instruction information from the authentication controller 112 (step S1). The selection unit 111 then detects the number of face regions detected by the face region detector 103 (step S2). According to the result of detection of the number of face regions, the selection unit 111 switches between a first process based on an image captured by the camera 101 and a second process based on images captured by the cameras 101 and 102. When the number of face regions is one, the selection unit selects the first process. When the number of face regions is more than one, the second process is selected.

Specifically, when the number of face regions is one, the entry candidate selection unit 111 outputs information of the detected face region (the image captured by the camera 101) as a candidate for entry to the face feature extraction unit 105 (step S3).

If, on the other hand, the number of face regions is more than one, the entry candidate selection unit 111 outputs display information to the authentication controller 112 for the purpose of visual confirmation (step S4). This display information includes person region information detected by the person region detector 104 (the image captured by the camera 102) and a message to request selection of a candidate for entry. The authentication controller 112, upon receipt of the display information from the entry candidate selection unit 111, sends display control information to the display unit 108. As the result, such an image as shown in FIG. 3 is displayed. The entry candidate selection unit 111 then obtains entry candidate selection information (step S5).

That is, as shown in FIG. 3, the display unit 108 displays the image 11 captured by the second camera 102, the person regions 12a and 12b detected by the person region detector 104, the identification information 13 given to the detected person regions 12a and 12b, the message to select a candidate for entry, and the select touch buttons 14.

A person in charge (manager) visually confirms the displayed contents, then select a candidate for entry from among the detected persons and enters entry candidate select information using the touch buttons 14. The entry candidate select information thus entered is sent to the entry candidate selection unit 111 via the authentication controller 112. According to the entry candidate select information, the entry candidate selection unit 111 selects face region information corresponding to the candidate for entry from among the items of fare region information sent from the face region detector 103 and sends it to the face feature extraction unit 105 (step S6).

The face feature extraction unit 105 extracts face feature information from face region information sent from the entry candidate selection unit 111 and then enters it into the face collation dictionary unit 106 as dictionary information.

The authentication controller 112, which controls the entire device, is adapted to mainly carry out a dictionary information entry process and an authentication process (collation process). The dictionary information entry process will be described first. For example, suppose that the authentication unit initiates the entry process upon receipt of entry instruction information from the operating unit 109. Upon receipt of entry instruction information from the operating unit 109 or passage detect information from the gate controller 110 (the gate device 3), the authentication controller outputs entry instruction information to the entry candidate selection unit 111.

The entry process may be initiated by receiving passage detection information from the gate controller 110 rather than by receiving entry instruction information from the operating unit 109. This will allow unauthorized passers-by to be entered into the dictionary.

Next, the authentication process (collation process) will be described. For example, suppose that the authentication process is initiated when a face region is detected from an input image from the first camera 101 in a situation in which no entry instruction information is received. When the face feature detector 103 detects the fate region of a person from an input image, the authentication controller 112 obtains the similarity of that person from the face collation unit 107. The similarity thus obtained is compared with a preset decision threshold. When the similarity is not less than the threshold, it is decided that the person has been entered in advance. If, on the other hand, the similarity is less than the threshold, it is decided that the person has not been entered. The result of decision is displayed on the display unit 108 and passage control information based on this decision result is output to the gate controller 110.

According to the first embodiment, as described above, when two or more persons are present at the time of entry of dictionary information, a candidate for entry is selected through visual observation by a person in charge, allowing only appropriate persons to be entered into the dictionary unit.

A second embodiment of the invention will be described next.

The configuration of an entrance/exit management system to which a face image read apparatus according to the second embodiment is applied remains basically unchanged from that of the first embodiment (FIG. 1) and hence its illustration is omitted. A description is therefore given of only the entry candidate selection unit 111 which is somewhat different in function from that in the first embodiment and its associated parts.

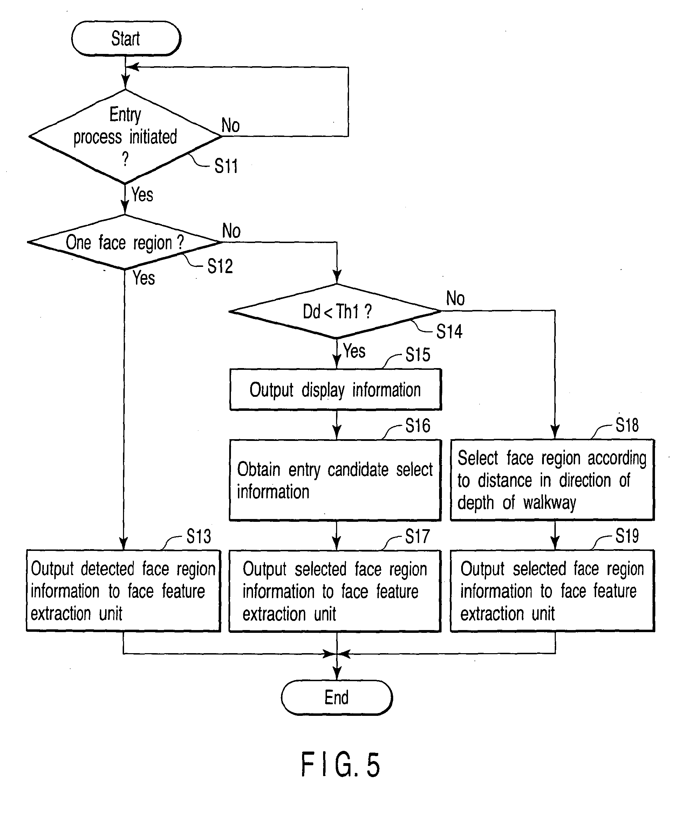

The entry candidate selection unit 111 carries out a process of selecting a person which becomes a candidate for entry at the time of entry of dictionary information. The concrete flow of the process will be described with reference to a flowchart illustrated in FIG. 5.

The entry candidate selection unit 111 initiates the entry candidate selection process upon receipt of entry instruction information from the authentication controller 112 (step S11). The selection unit 111 then detects the number of face regions detected by the face region detector 103 (step S12). According to the result of detection of the number of face regions, the selection unit 111 switches between a first process based on an image captured by the camera 101 and a second process based on images captured by the cameras 101 and 102. When the number of face regions is one, the selection unit selects the first process. When the number of face regions is more than one, the second process is selected.

Specifically, when the number of face regions is one, the entry candidate selection unit 111 outputs the detected face region information (the image captured by the camera 101) as a candidate for entry to the face feature extraction unit 105 (step S13).

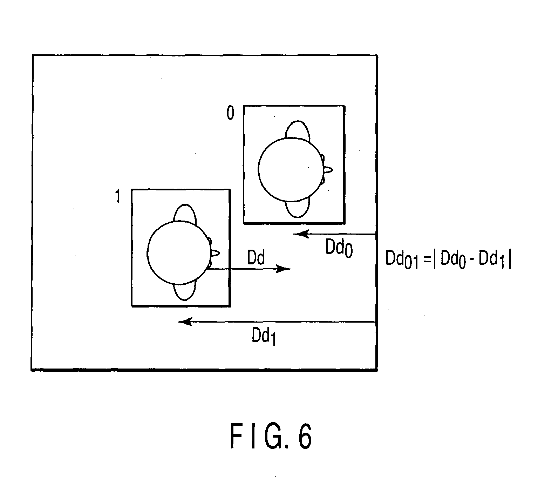

If, on the other hand, the number of face regions is more than one, the entry candidate selection unit 111 calculates the distance (Dd) in the direction of depth of the walkway 1 between the person regions using face region information (an image captured by the camera 102) obtained from the face region detector 104 and then determines if the calculated distance Dd is less than a preset threshold (Th1) (step S14). The distance Ds in the direction of depth of the walkway between person regions is defined as shown in FIG. 6 and calculated by

$$Dd = \min\left(\sum_{i=0}^{n}\sum_{j=0}^{n}Dd_{ij}\right), \text{ where } Dd_{ij} = |Dd_i$$

- Dd_j| and n is the number of persons detected.

If the decision in step S14 is that the distance Dd is less than the threshold Th1, then the same process as in the first embodiment is carried out. That is to say, the entry candidate selection unit 111 outputs display information to the authentication controller 112 in order to allow visual confirmation (step S15). Upon receipt of the display information from the entry candidate selection unit 111, the authentication controller 112 sends display control information to the display unit 108 to display such an image as shown in FIG. 3 on it and then obtains entry candidate select information (step S16).

That is, as shown in FIG. 3, on the display unit 108 are displayed an image 11 captured by the second camera 102, person regions 12a and 12b detected by the person region detector 104, identification information 13 given to the detected person regions 12a and 12b, a message to prompt a person in charge to select a candidate for entry, and select touch buttons 14.

The person in charge (manager) visually confirms the displayed contents, then select a candidate for entry from among the detected persons and input entry candidate select information using the touch buttons 14. The entry candidate select information thus input is sent to the entry candidate selection unit 111 via the authentication controller 112. According to the entry candidate select information, the entry candidate selection unit 111 selects face region information corresponding to the candidate for entry from among the items of fare region information sent from the fare region detector 103 and sends it to the face feature extraction unit 105 (step S17).

If, on the other hand, the decision in step S14 is that the distance Dd is not less than the threshold Th1, then the entry candidate selection unit 111 selects the person whose distance from the gate 3 is minimum (the person nearest to the gate) as a candidate for entry (step S18). The selection unit then selects face region information corresponding to the candidate for entry from among two or more items of face region information from the fare region detector 103 and outputs it to the face feature extraction unit 105 (step S19).

According to the second embodiment, as described above, if two or more persons are present at the time of entry of dictionary information, switching between the processes is made according to the difference in distance between the persons, allowing only an appropriate person to be entered and moreover the time required for entry to be saved.

A third embodiment of the present invention will be described next.

The configuration of an entrance/exit management system to which a face image read apparatus according to the third embodiment is applied remains basically unchanged from that of the first embodiment (FIG. 1) and hence its illustration is omitted. A description is therefore given of only the entry candidate selection unit 111 which is somewhat different in function from that in the first embodiment and its associated parts.

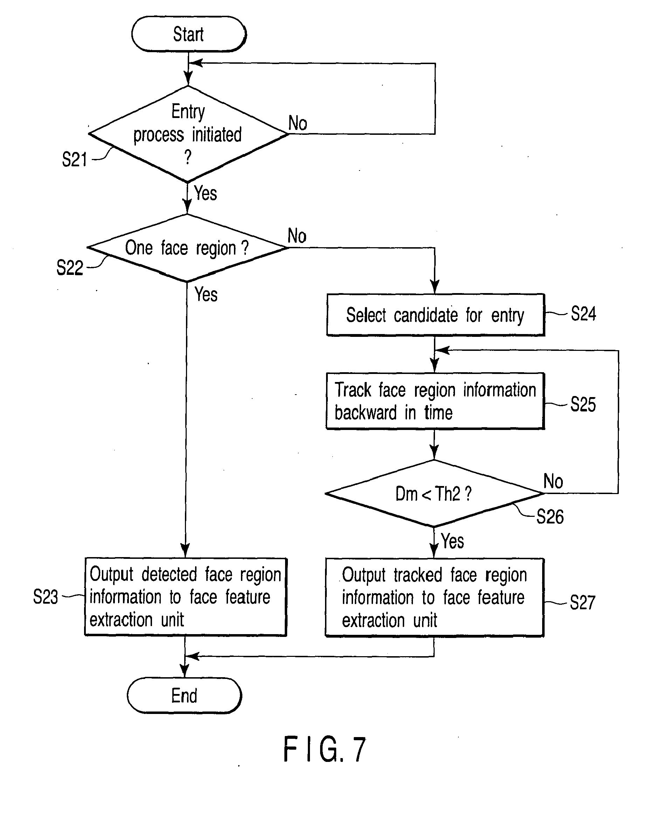

The entry candidate selection unit 111 carries out a process of selecting a person which becomes a candidate for entry at the time of entry of dictionary information. The concrete flow of the process will be described with reference to a flowchart illustrated in FIG. 7.

The entry candidate selection unit 111 initiates the entry candidate selection process upon receipt of entry instruction information from the authentication controller 112 (step S21). The selection unit 111 then detects the number of face regions detected by the face region detector 103 (step S22). According to the result of detection of the number of face regions, the selection unit 111 switches between a first process based on an image captured by the camera 101 and a second process based on images captured by the cameras 101 and 102. When the number of face regions is one, the selection unit selects the first process. When the number of face regions is more than one, the second process is selected.

Specifically, when the number of face regions is one, the entry candidate selection unit 111 outputs the detected face region information (the image captured by the camera 101) as a candidate for entry to the face feature extraction unit 105 (step S23). In more detail, face region information contained in a predetermined number of successive frames of image information captured by the camera 101 over a predetermined time is output as a candidate for entry. That is to say, face region information of a person continuously captured over a predetermined time before a certain time is output as a candidate for entry.

If, on the other hand, the number of face regions detected is two or more, then the entry candidate selection unit 111 selects a candidate for entry in accordance with the selection method in the first or second embodiment (step S24). In more detail, the person-to-person distance is detected on the basis of an image captured by the camera 102. When the person-to-person distance detected is not less than a preset threshold Th2 (when persons are too close to each other, their face regions cannot be detected correctly), face region information contained in a number of successive frames of image information captured by the camera 101 over a predetermined time is output. That is to say, of face region information contained in a number of successive frames, face region information which satisfies the condition that the person-to-person distance is not less than a predetermined value is output.

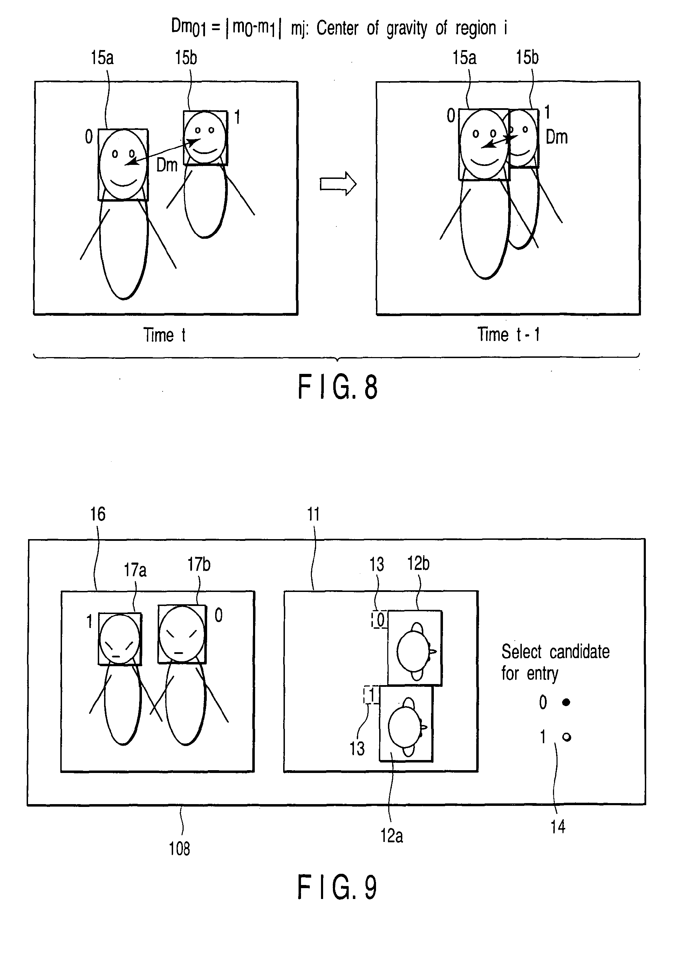

Here, an example of output of face region information which satisfies the condition that the person-to-person distance is not less than the threshold will be explained. A process of tracking face region information backward in time is repeated until the distance Dm between face regions decreases below the preset threshold Th2 (steps S25 and S26). The distance Dm between face regions is defined as shown in FIG. 8 and calculated by

$$Dm = \min\left(\sum_{i=0}^{n} \sum_{j=0}^{n} Dm_{ij}\right),$$

where $Dm_{ij} = |m_i - m_j|$, n is the number of persons detected, and $m_i$ is the center of gravity of region i. The distance Dm between face regions represents the distance between the centers of gravity of face regions detected. In FIG. 8, a face region 15a and a face region 15b denotes face regions detected by the face region detector 103.

The tracking process is terminated when the distance Dm between face regions has decreased below Th2 and then face region information tracked up to this point is output to the face feature extraction unit 105 (step S27).

According to the third embodiment, as described above, when two or more persons are present at the time of entry of dictionary information, an image used for entry is selected according to the distance between their face regions, which allows only an image that can identify the person himself or herself with certainty to be used for entry. That is, only appropriate persons can be entered into the dictionary unit.

Thus, the third embodiment allows images captured in the past to be entered. Thereby, even if, when a person passes through the gate or after he or she has passed through the gate (the time when shooting terminates), it becomes clear that he or she is an unauthorized one, image entry of that unauthorized person becomes possible.

Next, a fourth embodiment of the present invention will be described.

The configuration of an entrance/exit management system to which a face image read apparatus according to the fourth embodiment is applied remains basically unchanged from that of the first embodiment (FIG. 1) and hence its illustration is omitted. A description is therefore given of only the display unit 108 which is somewhat different in function from that in the first embodiment and its associated parts.

The display unit 108 displays various items of information on the basis of display control information from the authentication controller 112 as described previously. When two or more candidates for entry are present, the display unit 108 displays to the person in charge information that allows visual confirmation. Specifically, as shown in FIG. 9, in addition to the displayed contents as shown in FIG. 3 (an image 11 captured by the second camera 102, person regions 12a and 12b detected by the person region detector 104, identification information 13 given to the person regions 12a and 12b detected, a message to prompt the person in charge to select a candidate for entry, and select touch buttons 14), an image 15 captured by the first camera 101 is displayed simultaneously with and adjacent to the image 11 captured by the second camera 102. The display start time is set to the time when passage detect information is obtained from the gate controller 110 (gate device 3). In FIG. 9, a face region 17a and a face region 17b denote face regions detected by the face region detector 103.

According to the fourth embodiment, as described above, a face detecting image at the time of entry and an image captured with a larger field of view are displayed synchronously with each other and side by side, thus allowing visual confirmation to be carried out with ease.

Although the embodiments have been described in terms of an example of entering new dictionary information (face feature information) into a face collation dictionary, the principles of the invention is equally applicable to replacement of dictionary information already entered into the face collation dictionary with new dictionary information.

## Claims

1. A face image read apparatus which reads the face image of a moving person by the time he or she arrives at a particular position, **characterized by** comprising:

a first image capture unit (101) configured to capture an area where the moving person enters from a first direction;
a second image capture unit (102) configured to capture the area where the moving person enters from a second direction;
a first detector unit (103) configured to detect the face region of the moving person from an image captured by the first image capture unit;
a second detector unit (111) configured to detect whether the number of face regions detected by the first detector unit is one or more; and
a switching control unit (111) configured to, according to the result of detection by the second detector unit, switch between a first process based on an image captured by the first image capture unit and a second process based on images captured by the first and second image capture units.

**2.** The apparatus according to claim 1, **characterized in that** the switching control unit selects the first process when the number of face regions detected by the second detector unit is one and selects the second process when the number of face regions is more than one, and the first process includes outputting information of the detected face region and the second process includes outputting an image captured by the second image capture unit to a display unit, outputting to the display unit a message to request selection of a candidate for entry, and outputting information of the face region of the selected candidate for entry.

**3.** The apparatus according to claim 1, **characterized in that** the switching control unit selects the first process when the number of face regions detected by the second detector unit is one and selects the second process when the number of face regions is more than one, and the first process includes outputting information of the detected face region and the second process includes detecting the distance between persons from the image captured by the second image capture unit, determining a person who is the nearest to the particular position as a candidate for entry on condition that the distance detected is not less than a predetermined value, and outputting information of the face region of the determined candidate for entry.

**4.** The apparatus according to claim 3, **characterized in that** the second process includes detecting the distance between persons from the image captured by the second image capture unit, outputting the image captured by the second image capture unit to a display unit on condition that the distance detected is less than the predetermined value, outputting to the display unit a message to request selection of a candidate for entry, and outputting information of the face region of the selected candidate for entry.

**5.** The apparatus according to claim 2, **characterized in that** the second process includes outputting the images captured by the first and second image capture units so that they are displayed simultaneously and side by side.

**6.** The apparatus according to claim 4, **characterized in that** the second process includes outputting the images captured by the first and second image capture units so that they are displayed simultaneously and side by side.

**7.** The apparatus according to claim 1, **characterized in that** the switching control unit selects the first process when the number of face regions detected by the second detector unit is one and selects the second process when the number of face regions is more than one, and the first process includes outputting face region information contained in a number of successive frames captured by the first image capture unit over a predetermined time, and the second process includes detecting the distance between persons from the image captured by the second image capture unit and outputting the face region information contained in the successive frames captured by the first image capture unit on condition that the distance detected is not less than a predetermined value.

**8.** The apparatus according to claim 7, **characterized in that** the second process includes outputting, of the face region information contained in the successive frames, face region information that satisfies the condition that the distance between persons is not less than a predetermined value.

**9.** The apparatus according to claim 1, **characterized by** further comprising a face feature extraction unit (105) configured to extract face feature information from the face region information output by the first or second process, and an entry unit (106) configured to enter face feature information extracted by the face feature extraction unit into it.

**10.** The apparatus according to claim 9, **characterized by** further comprising a collation unit (107) configured to collate the face feature information extracted by the face feature extraction unit with face feature information which has been entered into the entry unit.

**11.** A face image read method which reads the face image of a moving person by the time he or she arrives at a particular position, **characterized by** comprising:

capturing an area where the moving person enters from first and second directions;
detecting the face region of the moving person from an image captured from the first direction;
detecting whether the number of face regions detected is one or more; and
switching, according to the result of detection of the number of face regions, between a first process based on an image captured from the first direction and a second process based on images captured from the first and second directions.

**12.** The method according to claim 11, **characterized in that** the step of switching selects the first process when the number of face regions detected is one and selects the second process when the number of face regions detected is more than one, and the first process includes outputting information of the detected face region, and the second process includes outputting an image captured from the second direction to a display unit, outputting to the display unit a message to request selection of a candidate for entry, and outputting information of the face region of the selected candidate for entry.

13. The method according to claim 11, **characterized in that** the step of switching selects the first process when the number of face regions detected is one and selects the second process when the number of face regions is more than one, and the first process includes outputting information of the detected face region and the second process includes detecting the distance between persons from the image captured from the second direction, determining a person who is the nearest to the particular position as a candidate for entry on condition that the distance detected is not less than a predetermined value, and outputting information of the face region of the determined candidate for entry.

14. The method according to claim 13, **characterized in that** the second process includes detecting the distance between persons from the image captured from the second direction, outputting the image captured from the second direction to a display unit on condition that the distance detected is less than the predetermined value, outputting to the display unit a message to request selection of a candidate for entry, and outputting information of the face region of the selected candidate for entry.

15. The method according to claim 11, **characterized in that** the step of switching selects the first process when the number of face regions detected is one and selects the second process when the number of face regions is more than one, and the first process includes outputting face region information contained in a number of successive frames captured from the first direction over a predetermined time, and the second process includes detecting the distance between persons from the image captured from the second direction and outputting the face region information contained in the successive frames captured from the first direction on condition that the distance detected is not less than a predetermined value.

16. The method according to claim 15, **characterized in that** the second process includes outputting, of the face region information contained in the successive frames, face region information that satisfies the condition that the distance between persons is not less than a predetermined value.

17. An entrance/exit management system adapted to read the face image of a moving person by the time he or she arrives at a particular position, collate face feature information extracted from the read face image with previously entered face feature information, decide whether or not the person is a previously entered person, and open or shut a gate on the basis of the result of decision, **characterized by** comprising:

a first image capture unit (101) configured to capture an area where the moving person enters from a first direction;
a second image capture unit (102) configured to capture the area where the moving person enters from a second direction;
a first detector unit (103) configured to detect the face region of the moving person from an image captured by the first image capture unit;
a second detector unit (111) configured to detect whether the number of face regions detected by the first detector unit is one or more;
a switching control unit (111) configured to, according to the result of detection by the second detector unit, switch between a first process based on an image captured by the first image capture unit and a second process based on images captured by the first and second image capture units;
a face feature extraction unit (105) configured to extract face feature information from face region information output through the process selected by the switching control unit;
a collation unit (107) configured to collate the face feature information extracted by the face feature extraction unit with previously entered face feature information; and
a gate control unit (110) configured to control opening or shutting of the gate according to the result of collation by the collation unit.

18. The system according to claim 17, **characterized in that** the switching control unit selects the first process when the number of face regions detected is one and selects the second process when the number of face regions is more than one, and the first process includes outputting information of the detected face region and the second process includes outputting an image captured by the second image capture unit to a display unit, outputting to the display unit a message to request selection of a candidate for entry, and outputting information of the face region of the selected candidate for entry.

19. The system according to claim 17, **characterized in that** the switching control unit selects the first process when the number of face regions detected is one and selects the second process when the number of face regions is more than one, and the first process includes outputting information of the detected face region and the second process includes detecting the distance between persons from the image captured by the second image capture unit, determining a person who is the nearest to the particular position as a candidate for entry on condition that the detected distance is not less than a predetermined value, and outputting information of the face region of the determined candidate for entry.

20. The system according to claim 19, **characterized in that** the second process includes detecting the distance between persons from the image captured by the second image capture unit, outputting the image captured by the second image capture unit to a display unit on condition that the distance detected is less than the predetermined value, outputting to the display unit a message to request selection of a candidate for entry, and outputting information of the face region of the selected candidate for entry.

101 ─ First camera

Input image

103 ─ Face region detector

Face feature information

105 ─ Face feature extraction unit

Face feature information

107 ─ Face collation unit

106 ─ Face collation dictionary unit

Second camera ─ 102

Input image

Person region detector ─ 104

Person region information

Face region information

Entry candidate selection unit ─ 111

Face region information

Entry instruction information

Entry candidate selection information

Passage detect information

112 ─ Authentication controller

Display information

Display control information

Entry instruction information

Entry candidate selection information

Passage detect information

Passage control information

Display unit

108

Operating unit

109

Gate controller

110

# FIG. 1

FIG. 2A

FIG. 2B

Select candidate
for entry

0    ●

1    ○

FIG. 3

```
                    ┌──────────┐
                    │  Start   │
                    └──────────┘
                         │
                         ▼
         S1 ─┐      ╱‾‾‾‾‾‾‾‾‾╲        No
            └─────<   Entry     >─────────────┐
                  ╲ process     ╱              │
                   ╲ initiated ╱               │
                    ╲    ?    ╱                │
                     ╲___╱                     │
                       │ Yes                   │
                       ▼                       │
         S2 ─┐    ╱‾‾‾‾‾‾‾‾‾╲      No          │
            └────< One face    >───────┐       │
                  ╲ region ?  ╱         │       │
                   ╲___╱                │       │
                     │ Yes             ▼        │
                     ▼          ┌──────────────────┐
         ┌────────────────────┐ │ Output display   │─ S4
         │ Output detected    │ │ information       │
    S3 ─│ face region        │ └──────────────────┘
         │ information to     │          │
         │ face feature       │          ▼
         │ extraction unit    │ ┌──────────────────┐
         └────────────────────┘ │ Obtain entry     │─ S5
                     │           │ candidate select │
                     │           │ information      │
                     │           └──────────────────┘
                     │                    │
                     │                    ▼
                     │           ┌──────────────────┐
                     │           │ Output selected  │
                     │           │ face region      │─ S6
                     │           │ information to   │
                     │           │ face feature     │
                     │           │ extraction unit  │
                     │           └──────────────────┘
                     │                    │
                     ▼◄───────────────────┘
                ┌──────────┐
                │   End    │
                └──────────┘
```

# F I G. 4

Start

Entry
process initiated
?
— S11

No

Yes

One face region ?
— S12

No

Yes

$Dd < Th1$ ?
— S14

No

Yes — S15

Output display information

— S16

Obtain entry candidate select
information

Select face region according
to distance in direction of
depth of walkway
— S18

— S13

Output detected face region
information to face feature
extraction unit

— S17

Output selected face region
information to face feature
extraction unit

— S19

Output selected face region
information to face feature
extraction unit

End

FIG. 5

$$Dd_{01} = |Dd_0 - Dd_1|$$

# FIG. 6

```
        ┌─────────────┐
        │    Start    │
        └─────────────┘
               │
               ▼
         ╱─────────────╲          No
       ╱  Entry          ╲─────────────────┐
      ⟨  process initiated  ⟩               │
  S21 ╲      ?             ╱                │
        ╲─────────────╱                     │
               │ Yes                        │
               ▼                            │
         ╱─────────────╲     No             │
  S22  ⟨  One face region ?  ⟩──────────┐   │
        ╲─────────────╱                 │   │
               │ Yes                    ▼   │
               │              ┌──────────────────────┐
               │              │ Select candidate for entry │──S24
               │              └──────────────────────┘
               │                         │
               │                         ▼◄────────────┐
               │              ┌──────────────────────┐ │
               │              │ Track face region information │──S25
               │              │ backward in time      │ │
               │              └──────────────────────┘ │
               │                         │              │
               │                         ▼              │
               │                   ╱───────────╲   No   │
               │                 ⟨   Dm < Th2 ?  ⟩───────┘
               │                   ╲───────────╱  S26
               │                         │ Yes
               ▼                         ▼
  ┌──────────────────────┐   ┌──────────────────────┐
S23│ Output detected face region │   │ Output tracked face region │ S27
  │ information to face feature │   │ information to face feature │
  │ extraction unit       │   │ extraction unit       │
  └──────────────────────┘   └──────────────────────┘
               │                         │
               ▼◄────────────────────────┘
        ┌─────────────┐
        │     End     │
        └─────────────┘
```

FIG. 7

16

$Dm_{01} = |m_0 - m_1|$  $m_j$: Center of gravity of region i

Time t

Time t - 1

# F I G. 8

Select candidate
for entry

0 ●

1 ○

# F I G. 9

European Patent
Office

**EUROPEAN SEARCH REPORT**

Application Number

EP 07 00 6533

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 801 640 B1 (OKUBO TATSUYA [JP] ET AL) 5 October 2004 (2004-10-05) * abstract; figure 1 * * column 2, line 38 - line 47 * ----- | 1-20 | INV. G06K9/00 |
| A | WO 03/034361 A (BIODENTITY SYSTEMS CORP [CA]; VAN BEEK GARY A [CA]; ADLER ANDREW JAMES) 24 April 2003 (2003-04-24) * abstract * * page 15, line 4 - line 23 * ----- | 1-20 | |
| A | US 2003/185419 A1 (SUMITOMO HIRONORI [JP]) 2 October 2003 (2003-10-02) * abstract; figures 1,4a-4d * ----- | 1-20 | |
| A | WO 02/097713 A (CENTRAL RESEARCH LAB LTD [GB]; YIN JIA HONG [GB]) 5 December 2002 (2002-12-05) * abstract; claim 10; figures 3-6 * ----- | 1-20 | |
| A | GB 2 400 999 A (AGILENT TECHNOLOGIES INC [US] AGILENT TECHNOLOGIES INC [US]; AVAGO TEC) 27 October 2004 (2004-10-27) * abstract; figure 1 * ----- | 1-20 | **TECHNICAL FIELDS SEARCHED (IPC)** G06K G07C H04N |

The present search report has been drawn up for all claims

| Place of search | Date of completion of the search | Examiner |
|---|---|---|
| Munich | 21 May 2007 | Müller, Martin |

EPO FORM 1503 03.82 (P04C01)

## ANNEX TO THE EUROPEAN SEARCH REPORT
## ON EUROPEAN PATENT APPLICATION NO.

EP 07 00 6533

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-2007

| Patent document cited in search report | | Publication date | Patent family member(s) | | Publication date |
|---|---|---|---|---|---|
| US 6801640 | B1 | 05-10-2004 | JP 3617373 B2 | | 02-02-2005 |
| | | | JP 2000348227 A | | 15-12-2000 |
| WO 03034361 | A | 24-04-2003 | AT 320054 T | | 15-03-2006 |
| | | | CA 2359269 A1 | | 17-04-2003 |
| | | | CN 1568489 A | | 19-01-2005 |
| | | | DE 60209760 T2 | | 18-01-2007 |
| | | | DK 1444667 T3 | | 17-07-2006 |
| | | | EP 1444667 A1 | | 11-08-2004 |
| | | | ES 2260476 T3 | | 01-11-2006 |
| | | | JP 2005505871 T | | 24-02-2005 |
| | | | NZ 532315 A | | 26-08-2005 |
| | | | PT 1444667 T | | 31-07-2006 |
| | | | US 2005063566 A1 | | 24-03-2005 |
| US 2003185419 | A1 | 02-10-2003 | JP 2003284053 A | | 03-10-2003 |
| WO 02097713 | A | 05-12-2002 | CA 2448452 A1 | | 05-12-2002 |
| | | | EP 1390906 A2 | | 25-02-2004 |
| | | | GB 2396410 A | | 23-06-2004 |
| | | | US 2004179736 A1 | | 16-09-2004 |
| GB 2400999 | A | 27-10-2004 | DE 102004002237 A1 | | 25-11-2004 |
| | | | JP 2004328736 A | | 18-11-2004 |
| | | | US 2004212677 A1 | | 28-10-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001266152 A
- JP 2000331207 A
- JP 2002140699 A

**Non-patent literature cited in the description**

- **FUKUI ; YAMAGUCHI.** *Face feature point extraction based on combination of shape extraction and pattern collation,* 1997, vol. J80-D-H (8), 2170-2177
- **NAKAI.** *Moving object detection technique using post confirmation,* 1994, vol. 94-CV90, 1-8
- **YAMAGUCHI ; FUKUI ; MAEDA.** *Face identification system using moving images,* June 1997, vol. PRMU97-5, 17-23